(19) **Europäisches Patentamt / European Patent Office / Office européen des brevets**

(11) **EP 2 085 931 A2**

(12) # EUROPEAN PATENT APPLICATION

(43) Date of publication:
**05.08.2009 Bulletin 2009/32**

(51) Int Cl.:
**G06T 7/60** (2006.01)

(21) Application number: **08014879.4**

(22) Date of filing: **22.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **31.12.2007 US 967497**

(71) Applicant: **Medical Diagnostics Technologies, Inc.**
**Las Vegas NV 89113 (US)**

(72) Inventor: **Yfantis, Spyros A.**
**Las Vegas, Nevada 89119 (US)**

(74) Representative: **Plöger, Jan Manfred et al**
**Gramm, Lins & Partner**
**Theodor-Heuss-Straße 1**
**38122 Braunschweig (DE)**

(54) **Method and system for characterizing prostate images**

(57) A pixel image is received and bounded contours are identified. Bounded contours are categorized based on certain pixel statistics, both comparative and with respect to given thresholds and other criteria, into one of a plurality of given categories. Image objects within certain categories are further characterized with respect to a certain estimation of area and symmetry.

Figure 1

**Description**

FIELD OF THE INVENTION

Embodiments of the invention pertain to imaging of tissue and, in some embodiments, to identifying and characterizing anatomical features from image data.

BACKGROUND OF THE INVENTION

For males in the United States prostate cancer is the second most common cancer that proves fatal. More than 230,000 new cases of prostate cancer were diagnosed in the U.S. during 2005. As of 2005, only lung cancer is reported to cause a higher number of deaths among U.S. males.

Various methods for detection and treatment are known. Overriding all detection and treatment, though, is that prostate cancer is almost always a progressive disease. Monitoring the stage of its progress is therefore critical, both to evaluate effectiveness of a treatment, and to select from among options most appropriate for the stage.

Imaging, particularly ultrasound imaging, is a powerful and versatile tool for measuring certain parameters and characteristics indicating progression of prostate cancer. Ultrasound imaging may be used for certain, limited direct measurements and evaluations. The ultrasound images may be used for guidance during biopsies and certain treatment surgery.

Ultrasound is not the only imaging method available. Magnetic Resonance Imaging (MRI) is also used - in certain, limited applications. MRI has particular shortcomings, though, such that it is not a typical first line means for imaging in the treatment of prostate cancer. Shortcomings include high cost, lack of real-time images, relative scarcity of the equipment, bulkiness, and typically low tolerance for metal, e.g. surgical instruments, proximal to tissue during the MRI imaging process.

Ultrasound therefore has significant realized benefits, namely that it provides convenient real-time imaging of internal anatomic structures, the equipment is relatively inexpensive and, unlike MRI, metal structures may be in the field of view. Ultrasound, for this reason, is a typical imaging choice for guiding biopsy needles, surgical instruments and cryogenic devices.

Current ultrasound imaging has certain shortcomings. One is that although automatic edge and contour detection algorithms such as, for example, the Cannes gradient maximum suppression method, are known, errors may present such that manual operation, or correction may be required. One cause is that in certain ultrasound imaging, depending for example on the positioning of the transducer, different organs may present similar contours. Therefore, in such imaging, an uncertainty may require user skill and judgment to resolve.

SUMMARY OF THE INVENTION

One embodiment includes receiving a pixel image of anatomical structures such as, for example, a prostate and surrounding organ regions, automatic identification of bounded contours, automatic real time separation of different bounded contours into one of a plurality of categories including, for example, a prostate region, a bladder region and other organ regions.

One embodiment includes real time separation of different contours into one of a plurality of categories of anatomic structures and features, and provides real time display, with identifying highlighting, of the contours and their respective categories.

One embodiment includes real time first separation of different contours into one of a plurality of categories of anatomic structures and features, based on a threshold test of a min - max of pixels within each region bounded by a contour.

One embodiment includes real time second separation, on bounded regions categorized as a first category by the first separation, into one of a second and third category, based on a particular threshold against a ratio of certain detected distances between certain edges of the contours.

One embodiment includes real time estimation of an area of one or more closed contours.

One embodiment includes real time estimation of symmetry, of one or more closed contours.

Embodiments and aspects of the invention may provide a wide range of significant diagnostic and evaluation benefits not provided by current ultrasound methods and systems. Benefits include reducing instances necessitating repeat imaging due to errors, reduction of necessity for biopsy, and more economical and frequent monitoring of certain conditions.

BRIEF DESCRIPTION OF THE DRAWINGS

Fig. 1 is a high level functional block diagram representing one example system for practicing some embodiments of the invention;

Fig. 2 shows one example ultrasound image in which certain anatomical features and characteristics may be identified according to one or more embodiments;

Fig. 3 is one high level functional flow diagram of one method according to one embodiment, for identifying boundaries, segmenting boundaries, and characterizing features classifying according to one embodiment;

Fig. 4 shows a detailed functional flow diagram of one example implementation of a boundary identification within the Fig. 3 functional flow;

Fig. 5 shows a detailed functional flow diagram of one example characterization of anatomical features within the Fig. 3 functional flow.

Fig. 6 shows one example image indicating one highlighted boundary of a prostate generated according to one embodiment;

Fig. 7 shows one example image indicating one highlighted boundary of a prostate generated and one highlighted boundary of a bladder generated according to one embodiment;

Fig. 8 shows one example image indicating one highlighted boundary of a prostate generated, one highlighted boundary of a bladder, and one highlighted boundary of a urethra generated according to one embodiment;

Fig. 9 shows one example image indicating one highlighted boundary of seminal vesicles generated according to one embodiment; and

Fig. 10 graphically represents certain example operations of estimating a vertical length and a horizontal length of one example bounded contour region.

DETAILED DESCRIPTION OF ILLUSTRATIVE EMBODIMENTS

The following detailed description refers to accompanying drawings that form part of this description. The description and its drawings, though, show only examples of systems and methods embodying the invention and with certain illustrative implementations. Many alternative implementations, configurations and arrangements can be readily identified by persons of ordinary skill in the pertinent arts upon reading this description.

The following detailed description will enable persons of ordinary skill in the pertinent arts to practice the invention, by applying the common knowledge necessarily possessed by such persons to this disclosure. This knowledge includes, but is not limited to, a basic working knowledge of medical ultrasound scanners; a basic working knowledge of pixel based image processing including edge detection; and a basic working knowledge of writing and troubleshooting machine executable code for performing medical image processing.

Numerals appearing in different ones of the accompanying drawings, regardless of being described as the same or different embodiments of the invention, reference functional blocks or structures that are, or may be, identical or substantially identical between the different drawings.

Unless otherwise stated or clear from the description, the accompanying drawings are not necessarily drawn to represent any scale of hardware, functional importance, or relative performance of depicted blocks.

Unless otherwise stated or clear from the description, different illustrative examples showing different structures or arrangements are not necessarily mutually exclusive. For example, a feature or aspect described in reference to one embodiment may, within the scope of the appended claims, be practiced in combination with other embodiments. Therefore, instances of the phrase "in one embodiment" do not necessarily refer to the same embodiment.

Example systems and methods embodying the invention are described in reference to subject input images generated by ultrasound. Ultrasound, however, is only one example application. Systems and methods may embody and practice the invention in relation to images representing other absorption and echo characteristics such as, for example, X-ray imaging.

Example systems and methods are described in reference to example to human male prostate imaging. However, human male prostate imaging is only one illustrative example and is not intended as any limitation on the scope of systems and methods that may embody the invention. It is contemplated, and will be readily understood by persons of ordinary skill in the pertinent art that various systems and methods may embody and practice the invention in relation to other human tissue, non-human tissue, and various inanimate materials and structures.

Example systems for practicing the invention are described in the drawings as functional block flow diagrams. The functional block diagram is segregated into depicted functional blocks to facilitate a clear understanding of example operations. The depicted segregation and arrangement of function blocks, however, is only one example representation of one example cancer tissue classification system having embodiments of the invention, and is not a limitation as to systems that may embody the invention. Further, labeled blocks are not necessarily representative of separate or individual hardware units, and the arrangement of the labeled blocks does not necessarily represent any hardware arrangement. Certain illustrative example implementations of certain blocks and combinations of blocks will be described in greater detail. The example implementations, however, may be unnecessary to practice the invention, and persons of ordinary skill in the pertinent arts will readily identify various alternative implementations based on this disclosure.

Embodiments may operate on any pixel image, or on any image convertible to a pixel form. Unless otherwise stated, N and M are used herein as arbitrary variables defining an example row-column dimension of the input image, but are only one example pixel arrangement. The invention may be practiced, for example, with input pixel images arranged in a polar co-ordinate system.

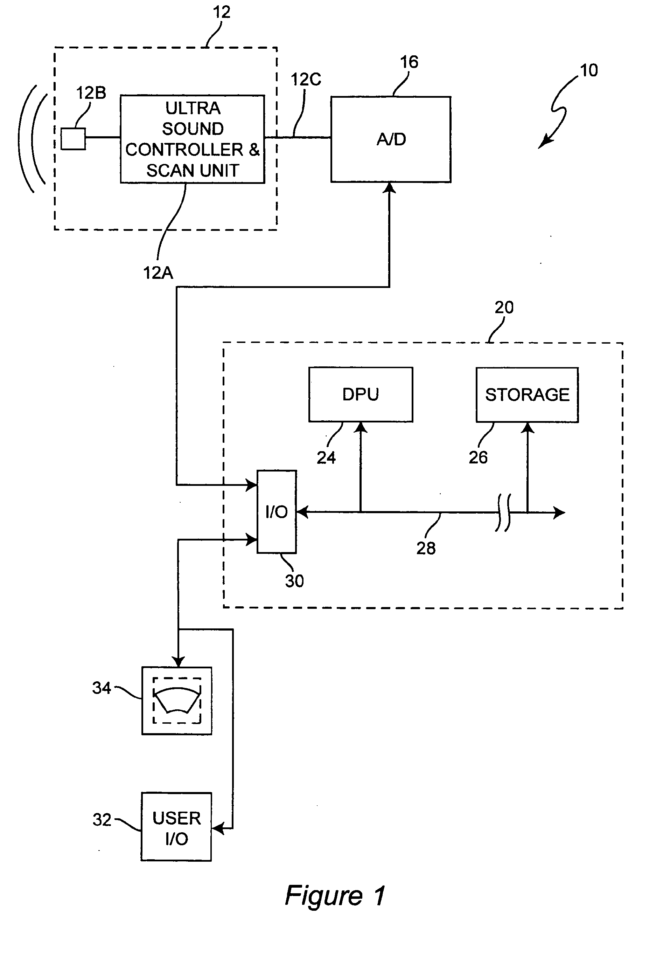

Fig. 1 shows one illustrative example system 10 to practice embodiments of the invention. Referring to Fig. 1, the example system 10 includes an ultrasound generator/receiver labeled generally as 12, having an ultrasound signal control processor 12A connected to a transmitter/receiver transducer unit 12B and a having a signal output 12C. The ultrasound generator/receiver 12 may be a conventional medical ultrasound scanner such as, for example, a B&K Medical Systems Model 2202 or any of a wide range of equivalent units and system available from other vendors well known to persons of ordinary skill in the pertinent arts. The transmitter/receiver transducer unit 12B may be, for example, a B & K Model 1850 transrectal probe, or may be any of the various equivalents available from other vendors well known to persons of ordinary skill.

Selection of the power, frequency and pulse rate of the ultrasound signal may be in accordance with conventional ultrasound practice. On example is a frequency in the range of approximately 3.5 MHz to approximately 12 MHz, and a pulse repetition or frame rate of approximately 600 to approximately 800 frames per second. Another example frequency range is up to approximately 80 MHz. As known to persons skilled in the pertinent arts, depth of penetration is much less at higher frequencies, but resolution is higher. Based on the present disclosure, a person of ordinary skill in the pertinent arts may identify applications where frequencies up to, for example, 80 MHz may be preferred.

With continuing reference to Fig. 1, the example system 10 includes an analog/digital (A/D) sampler and frame buffer 16 connecting to a data processing resource labeled generally as 20. It will be understood that the ultrasound generator/receiver12, the A/D sampler and frame buffer 16, and the data processing resource 20 may be implemented as one integrated system or may be implemented as any architecture and arrangement of hardware units.

Referring to Fig. 1, the depicted data processing resource 20 includes a data processing unit 24 for performing instructions according to machine-executable instructions, a data storage 26 for storing image data (not shown in Fig. 1) and for storing machine executable instructions (not shown in Fig. 1), and having an internal data/control bus 28, and a data/control interface 30 connecting the internal data/control bus 28 to the A/D sampler and frame buffer 16 and to a user data input unit 32, and a display 34.

The data storage 26 may include, for example, any of the various combinations and arrangements of data storage for use with a programmable data known in the conventional arts, a solid-state random access memory (RAM), magnetic disk devices and/or optical disk devices.

The data processing resource 20 may be implemented by a conventional programmable personal computer (PC) having one or more data processing resources, such as an Intel™ Core™ or AMD™ Athlon™ processor unit or processor board, implementing the data processing unit 24, and having any standard, conventional PC data storage 26, internal data/control bus 28 and data/control interface 30. The only selection factor for choosing the PC (or any other implementation of the data processing resource 20) that is specific to the invention is the computational burden of the described feature extraction and classification operations, which is readily ascertained by a person of ordinary skill in the pertinent art based on this disclosure.

With continuing reference to Fig. 1, the display 34 is preferably, but is not necessarily, a color display. As will be understood from this disclosure, embodiments of the present may include displaying pixels at different colors, according to a color legend, to represent different segmentations of the image (e.g., one color for a border of a prostate and another color for a border of a bladder). Whether black and white or color, the display 34 may be a cathode ray tube (CRT), liquid crystal display (LCD), projection unit or equivalent, having a practical viewing size and preferably having a resolution of, for example, 600 x 800 pixels or higher.

The user data input device 32 may, for example, be a keyboard (not shown), computer mouse (not shown) that is arranged through machine-executable instructions (not shown) in the data processing resource 20 to operate in cooperation with the display 34 or another display (not shown). Alternatively, the user data input unit 32 may be included as a touch screen feature (not shown) integrated with the display 34 or with another display (not shown).

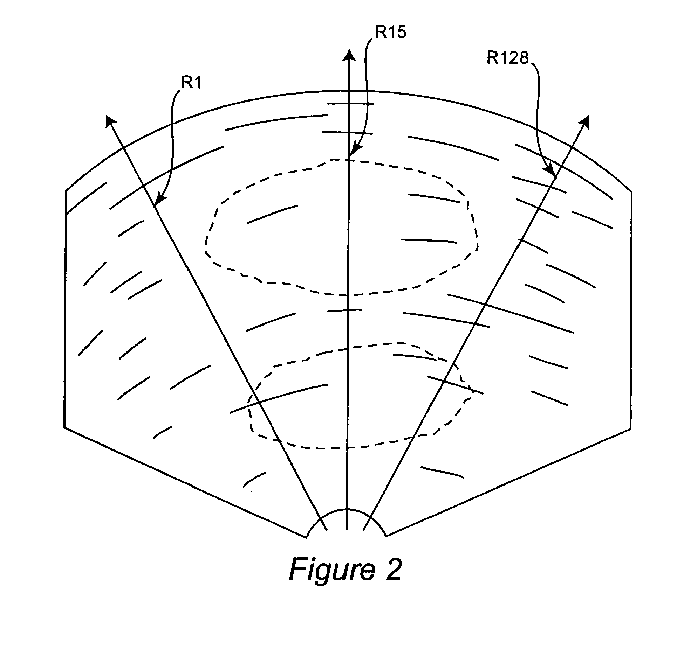

Fig. 2 shows one example ultrasound image including a prostate image (not separately labeled) generated by, for example, a TRUS configuration of the ultrasound generator 12 displayed on, for example, display 34. Referring to Fig. 2, as can be seen the contour or border of the prostate is not clearly visible. As described in greater detail, one benefit of the present invention is detection and display of the border of the prostate image, and further detection and segmentation of other anatomical features and regions.

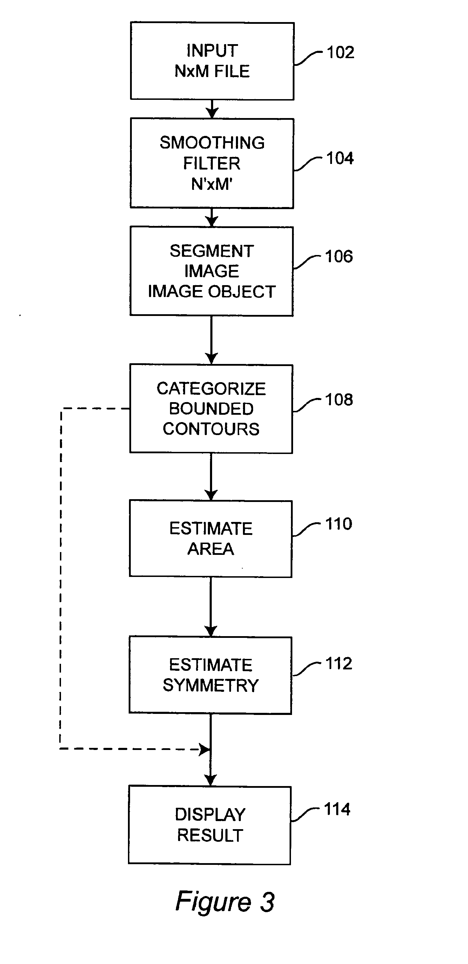

Fig. 3 is a high-level functional flow diagram describing one example method 100 according to one embodiment. Example method 100 may be practiced on, for example, a system according to Fig.1. Illustrative example operations of example method 100 are therefore described in reference to a system according to Fig. 1. Method 100 may be practiced, however, on any arrangement capable of performing the described operations including, for example, a data processing resource such as the Fig. 1 resource 20 located, at least in part, remote from one or more ultrasound scanners.

The phrases "pixel magnitude" and "magnitude of the pixels" are used interchangeably and, for this example, represent the echoic nature of the tissue at the location represented by the pixel location.

Referring to Fig. 3, at 102 an N x M pixel image file is input. The N x M image file may be a frame capture by the A/D sampler and frame buffer 16. Alternatively, the N x M image file may, for example, be generated remote from the system, e.g., Fig. 1 system 10, on which method 100 is being practiced, and then transferred to the system (e.g., Fig. 1 system 10) via an optical disk (not shown) or via the Internet, and stored in the data storage 26 of system 10.

With continuing reference to Fig. 3, at 104 an averaging filter may be, but is not necessarily applied to the N x M input image file. Whether to apply 104 is application-specific, readily determinable by a person or ordinary skill in the pertinent art, based on this disclosure, in view of, for example the particular image quality, and the quantity and characteristics of artifacts.

Referring to Fig. 3, one example implementation of the filter operation 104 is a 5 x 5 averaging filter (not separately shown). A 5 x 5 spatial averaging filter may be in accordance with conventional spatial filter techniques and, accordingly, further detailed description is omitted. The mask size of 5 x 5 is only one illustrative example. One example alternative is a 3 x 3 mask. Also, the filter 104 being an averaging filter is only one example. On example alternative filter is a geometric mean filter (not shown), Gaussian filter, median filter (not shown) or equivalent. The 5 x 5 spatial filter may be applied as a sliding window, moving in a raster scan manner over the entire N x M image, to generate a filtered image N' x M'. The filtering operations may be in accordance with conventional spatial filtering based on averages (or for, example, medians or equivalent) over a mask and, therefore, further description is omitted.

Referring to Fig. 3, after the 104 averaging filter generates the N' x M' image, a boundary identification 106 identifies and segments borders or edges of certain anatomical features of the subject. Illustrative example implementations and aspects of the boundary identification 106 are described in greater detail in reference to identifying a human (or of any other animal having comparable internal organs that can be imaged) prostate, bladder, urethra and seminal vessels. However, these organs and anatomical features of organs are only illustrative examples. Based on the present disclosure, a person or ordinary skill in the pertinent art can readily identify other applications for practicing the appended claims.

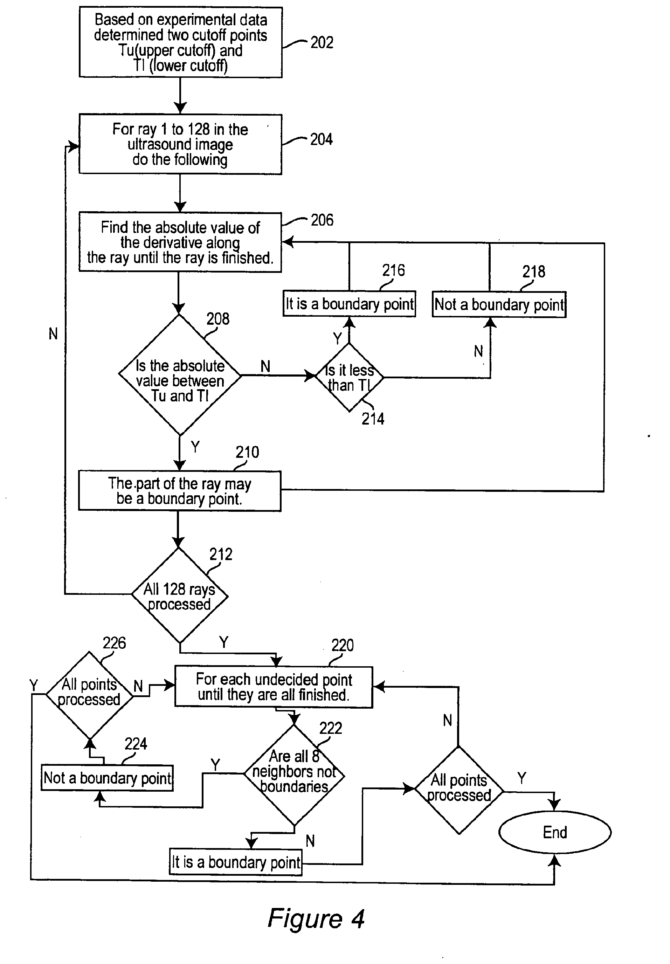

Fig. 4 shows a detailed functional flow diagram of one example implementation 200 of the Fig. 3 boundary identification 106.

Operations of the Fig. 4 example are described assuming the N x M image, and the corresponding N' x M' filtered image, as being generated by a TRUS configuration of the ultrasound generator 12 having a plurality of rays or channels, as "ray" and "channel" are defined in the conventional TRUS arts. Operations within the example 200 are described in reference to rays. One example quantity of rays in the plurality is 128. Referring to Fig. 2, illustrative examples of a ray are labeled R1, R15, and R128. As known in the conventional TRUS art, each ray corresponds to a transducer element (not shown) in the Fig. 1 transducer 12B. Although operations within the example 200 are described in reference to rays, these are not necessary. The described example operations, or equivalent, may be performed by other indexing protocols through the N x M pixels of an input image.

In overview, the Fig. 4 illustrated example implementation 200 identifies pixels as being a boundary pixel or non-boundary pixel based on a comparison of the magnitude of the gradient of the pixel against an upper cutoff, labeled for reference as $T_U$, and a lower cutoff, labeled for reference as $T_L$. The upper cutoff $T_U$ and the lower cutoff $T_L$ are determined a-priori, based on a simple, methodical incrementing of their respective values. Based on the present disclosure, a person of ordinary skill in the pertinent art can determine the upper cutoff $T_U$ and the lower cutoff $T_L$ without undue experimentation.

Referring to Fig. 4, at 202 the values of $T_U$ and $T_L$ are provided, as described above. It will be understood that the same values of $T_U$ and $T_L$ may be used for multiple operations according to Figs. 3 and 4, and Fig. 5 described below.

With continuing reference to Fig. 4, according to one embodiment 204 repeats one described iteration for each ray of the image, which in this example is the N' x M' array of pixels output from the Fig. 3 filtering 104. According to one embodiment, each iteration starts at 206, where the absolute value of the gradient for every pixel along the ray is calculated. The magnitude of the gradient may be labeled GradMag(j,k), and this measures the largest rate of change of the magnitude of the pixels at j,k, looking in all X-Y directions. GradMag(j,k) can only be approximated at 206 because the image at 206 is discreet pixels, not a continuous variable image. The approximation may be generated as

$$\nabla I(x,y)_{x=j,y=k} = \left( \frac{\partial I}{\partial X} + \frac{\partial I}{\partial Y} \right)_{x=j,y=k} \qquad \text{(Eq. 1)}$$

$$\left\|\nabla I(x,y)\right\|_{x=j,y=k} = \left(\sqrt{\left(\frac{\partial I}{\partial X}\right)^2 + \left(\frac{\partial I}{\partial Y}\right)^2}\right)_{x=j,y=k} \qquad \text{(Eq. 2)}$$

where GradMag (j,k) is a discrete difference approximation

$$GradMag(j,k) \approx \left\|\nabla I(x,y)\right\|_{x=j,y=k} \qquad \text{(Eq. 3)}$$

defined as

$$GradMag(j,k) \approx \sqrt{\left(\frac{((j+1),k)-((j-1),k)}{2}\right)^2 + \left(\frac{(j,(k+1))-(j,(k-1))}{2}\right)^2} \qquad \text{Eq. 4}$$

Referring to Fig. 4, the 206 calculation of GradMag (j,k) may be performed on, for example, the processing resource 20 configured with appropriate machine-executable instructions (not shown) in the data storage 26. Machine-executable instructions to perform these or equivalent operations are well within the skills of a person of ordinary skill in the pertinent arts, in view of the present disclosure.

According to one aspect, the GradMag(j,k) may be further approximated by omitting the squaring and square root operations of Eq. No. 4, as follows

$$GradMag(j,k) \approx \frac{1}{2}\left(((j+1),k)-(j-1),k)\right)+\left((j,(k+1))-(j,(k-1))\right) \qquad \text{(Eq. 5)}$$

As readily understood by a person of ordinary skill in the pertinent arts, the Eq. No. 5 omitting of the squaring and square root operations from Eq. No. 4 may significantly reduce computational burden, with a small, acceptable reduction in computational accuracy.

Referring to Fig. 4, according to one embodiment after 206 calculates or approximates the magnitude of the gradient at, preferably, the j,k pixel along a particular ray, followed by block 208 comparing GradMag(j,k) to the upper and lower cut off values $T_U$ and $T_L$. According to one aspect, if GradMag(j,k) is identified as between $T_U$ and $T_L$ the operation goes to 210, assigns the pixel j,k as a conditional boundary, goes to 212 to determine if all of the rays have been processed and, if "No", returns to 204 to repeat the iteration with the next ray. "Conditional" with respect to "boundary" means the identification of the pixel being a boundary or non-boundary depends on subsequent classification (i.e., boundary, non-boundary, conditional) of the pixel's neighbors, as described in greater detail below.

With continuing reference to Fig. 4, for consistent referencing to Fig. 4 and other example operations, determinations of a pixel being a boundary pixel, non-boundary pixel or conditional pixel will be generically referenced as BoundDec(j,k) = boundary, non-boundary, and conditional.

Referring to Fig. 4 if 208 identifies GradMag(j,k) as not between $T_U$ and $T_L$ then, according to one aspect, 214 identifies whether GradMag(j,k) is less than $T_L$. If the answer is "yes", the operation goes to 216, sets BoundDec(j,k) = boundary, and returns to 206 where it updates the values of j and k, and calculates the next GradMag(j,k). According to one aspect, if 214 is "no", i.e., GradMag(j,k) is not less than $T_L$, the operation goes to 218, sets BoundDec(j,k) = non-boundary, and returns to 206 where it updates the values of j and k, and calculates the next GradMag(j,k).

Referring to Fig. 4, it will be understood that the described operation of logical blocks 206 through 218 is not necessarily performed as a temporal sequence of operations. For example, all of the GradMag(j,k) values of a given ray may be calculated before any comparisons to $T_U$ and $T_L$ are performed. Also, the comparisons represented by 208 and 214 may be in any order.

With continuing reference to Fig. 4, according to one aspect, if a logical operation such as 206 or equivalent determines that the gradient magnitude, GradMag(j,k), and boundary classification, BoundDec(j,k), has been calculated for all pixels in the ray (e.g., ray R32 at Fig. 2) the operation goes to 212 to determine if all of the rays have been processed and, if "No", returns to 204 to repeat the iteration with the next ray, as described above. If 212 determines that all rays have been processed, the operation goes to 220, and 220 repeats iterations of operations shown as blocks 222-230 until all of the conditional pixels are finally identified as boundary or non-boundary.

Referring to Fig. 4, according to one embodiment, identifying conditional pixels as being one of boundary and non-boundary begins at 222, which inspects BoundDec(j,k) of a range of neighbors of the j,k conditional pixel. According to aspect, an example number of neighbors is eight. Further according to one aspect, if 222 determines that all neighbors, e.g., eight neighbors, are non-boundary the operation goes to 224, sets BoundDec(j,k) = non-boundary, and goes to 226 to determine if all of the conditional boundary pixels have been finally identified. According to one aspect, if 228 determines that all of the conditional boundary pixels have been finally identified the operation terminates at 230, and otherwise the operation goes to 220 to repeat the iteration for the next conditional boundary pixel.

With continuing reference to Fig. 4, according to one aspect when operation 224 determines that all neighbors, e.g., eight neighbors, are not non-boundary, i.e., that one of the eight is a boundary, the operation goes to 232, sets BoundDec(j,k) = boundary, and goes to 234 to determine whether the conditional boundary pixels have been finally identified. According to one aspect, when 234 determines that all of the conditional boundary pixels have been finally identified the operation terminates at 230 and, otherwise the operation goes to 220 to repeat the iteration for the next conditional boundary pixel.

Referring to Fig. 4, at 230 all of the pixels of every ray are identified as boundary or non-boundary. In other words, BoundDec(j,k) = boundary or non-boundary for every pixel in the image.

Referring to Fig. 4, according to one embodiment a logical boundary trace operation may be performed at a termination such as 230, and may include verifying continuity of boundaries, determining closed boundaries, and may include assigning closed boundaries a unique reference. For purposes of this description, the R closed boundaries determination at, for example 230, are referenced as ImageObject$_r$, for r = 1 to R.

With continuing reference to Fig. 4, operations according to all of blocks 208 through 234 may be performed on, for example, the processing resource 20 configured with appropriate machine-executable instructions (not shown) in the data storage 26. Machine-executable instructions to perform these or equivalent operations are well within the skills of a person of ordinary skill in the pertinent arts, in view of the present disclosure.

Referring back to Fig. 3, according to one embodiment after the boundary detection 106 identifies the closed boundaries ImageObject$_r$, a separation 108 separates each ImageObject$_r$ into one of Q different anatomical feature categories, arbitrarily labeled for reference as Category1, Category2 ... CategoryQ. One illustrative example Q is three, with Category1 = prostate, Category2 = bladder, and Catgeory3 = seminal vesicles. Other categories may include, for example, calcification regions within the prostate, rectal wall and the like.

According to one embodiment, the separation 108 may perform certain geometric operations to extract and later exploit, for example, ratios of certain distances between certain boundaries identified by the boundary operation of 106. Information extracted and exploited for discriminating between different anatomical features may include, for example, planar dimension aspect ratios, e.g., height to width ratio, probability distributions of the range (min-max) of the pixel intensity, autocorrelation functions, and spectral density.

According to one aspect, extraction at 108 may include calculating probability distributions of the range (min-max) of the pixel intensity, and categorizing based on the distributions. In accordance with one aspect, the categorizing is based on identified statistical rules, that may include the minimum of a typical bladder being close to the minimum of the prostate, the maximum of the bladder being smaller than the maximum of the prostate, and the probability distribution of the range of the bladder having a much smaller mean than the mean of the pixel intensity of the prostate. Machine-executable instructions for a digital processing resource, such as 20 shown in Fig. 1, to perform calculation and comparison of probability distributions, are well within the skills of a person of ordinary skill in the pertinent arts, in view of the present disclosure.

Further, in accordance with one aspect, statistical information extracted at 108 and on which categorizing at 108 is based may include the variance of the pixel intensity of a typical bladder image being much smaller than the variance of the pixel intensity of a typical prostate image. Machine-executable instructions for a digital processing resource, such as 20 shown in Fig. 1, to perform calculation and comparison of variances of different ImagObject regions' pixel intensity, are well within the skills of a person of ordinary skill in the pertinent arts, in view of the present disclosure.

Further, and in continuing overview, according to one aspect, other information extracted may include normalized autocorrelation functions for different ImageObject's enclosed pixels, and discrimination rules on which a categorizing is based may include, for example, the normalized autocorrelation function of the bladder being much higher than the normalized autocorrelation function of the prostate. Machine-executable instructions for a digital processing resource, such as 20 shown in Fig. 1, to perform calculation and comparison of normalized autocorrelation functions of different ImagObject regions, are well within the skills of a person of ordinary skill in the pertinent arts, in view of the present disclosure.

According to one aspect, other information extracted may include spectral density of different boundaries' pixels, and discrimination rules on which a categorizing is based may include the spectral density of a prostate having more energy in the high frequencies than the spectral density of a bladder.

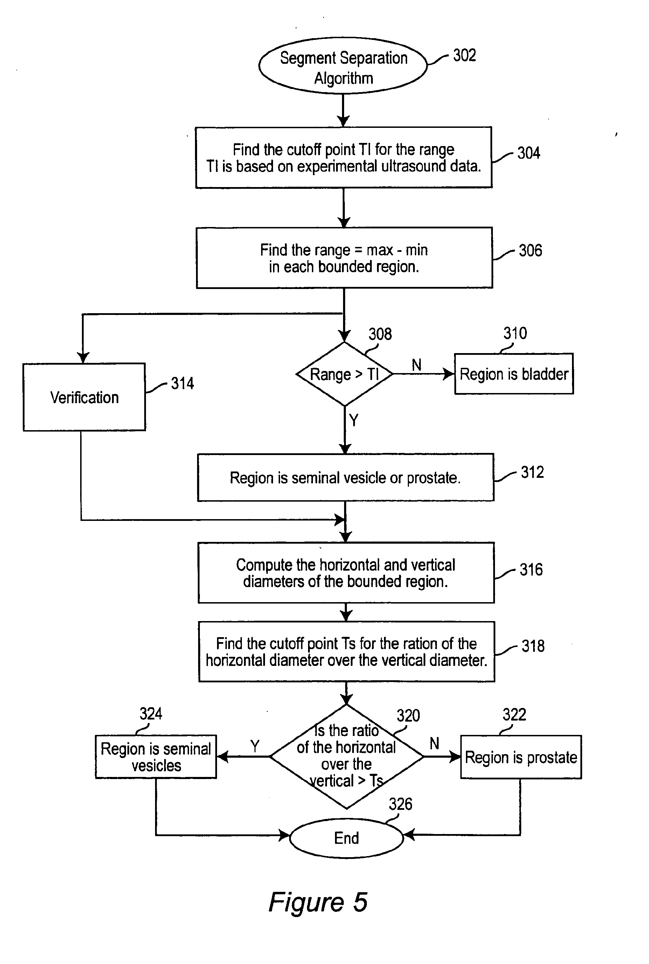

Fig. 5 shows a detailed functional flow diagram of one example implementation 300 of the Fig. 3 separation 108, according to one embodiment. Illustrative operations according to the Fig. 5 example implementation 300 are described in reference to specific anatomic features, but these are only illustrative examples.

Referring to the example shown at Fig. 5, an operation start is represented as logical block 302. According to one aspect, at 304 a cutoff point $T_{Cl}$ is provided or an operation of calculating a cutoff point $T_{Cl}$ is performed. According to one aspect, the $T_{CL}$ value is calculated based on observed differences between the maximum and minimum pixel intensity of images corresponding to different anatomical features. As one illustrative example, the intensity range of pixels corresponding to a bladder is significantly smaller than the intensity range of pixels corresponding to a prostate. Thus, according to one embodiment, a cutoff $T_{CL}$ is determined to distinguish between the bladder and the prostate within a given image. This cutoff is preferably determined empirically from ultrasound data from a large number of samples, comparing image regions known as corresponding to a bladder to image regions known as corresponding to a prostate.

With continuing reference to Fig. 5, at 306, according to one aspect the intensity range (maximum - minimum) is determined for each bounded region ImageObject identified at 106. According to the Fig. 5 example, a logical operation represented as 308 compares the intensity range to the $T_{CL}$ and, if the intensity range for the bounded region is identified as greater than $T_{CL}$ then a logical operation such as represented as 310 classifies the ImageObject region as a bladder.

Referring to Fig. 5, according to one aspect, at a logical operation such as represented as 310, if the intensity range is determined as lower then the $T_{CL}$ then the ImageObject region is classified as being other than a bladder. The ImageObject region may, for example, be the subject's prostate or seminal vesicles.

Referring to Fig. 5, according to one aspect, a verification test 314 may be performed, in addition to the 306-310 classification described above. One verification includes calculating the variance of the pixel intensity ImageObject and comparing the variance to statistics constructed from test samples. As one illustrative example, the variance of pixels within a typical bladder image is much smaller than the variance of pixel within a typical prostate image.

With continuing reference to Fig. 5, according to one embodiment, ImageObject regions determined by functional blocks 306-312 and/or by verification test 314 as being other than a bladder, are separated and classified, or identified as being non-classifiable.

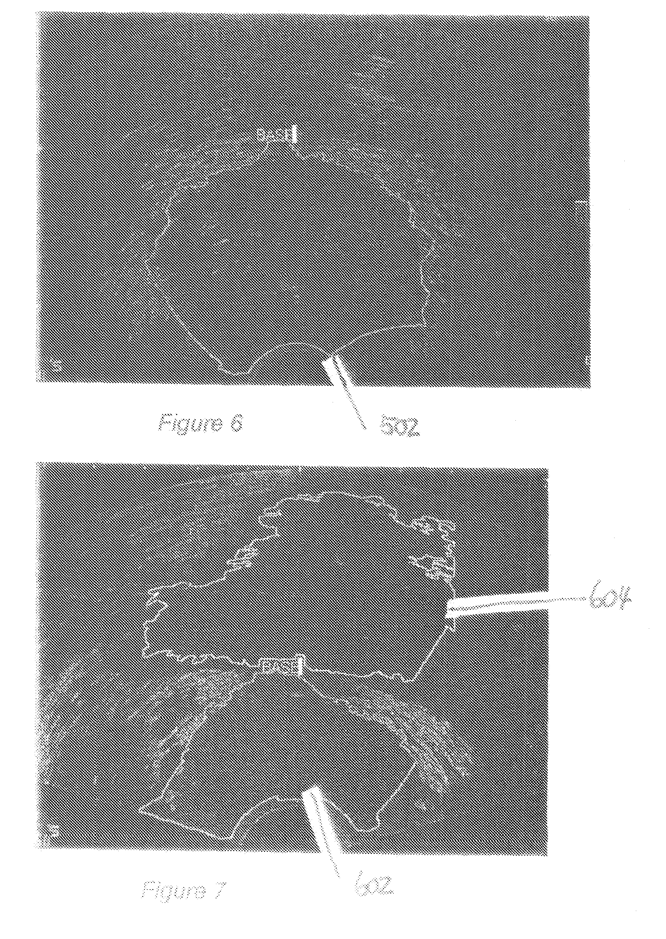

Referring to Fig. 5, according to one embodiment, at an operation such as represented by logical block 316, the horizontal and vertical diameters of the ImageObject region to be classified are calculated. Next, according to one aspect, at a logical operation such as represented at block 318, cutoff points represented by Ts are provided. According to one aspect, logical block 316 may extract diameter information by calculating the probability density function of the vertical diameters between boundaries of the ImageObject, exploiting the observed density function of the vertical diameters of the prostate and seminal vesicles being bimodal, with a local minimum between the two modes. According to one embodiment, the local minimum is set as a cutoff point between the prostate and the seminal vesicles, wherein vertical diameters less than the cutoff point may be estimated to be seminal vesicles, (See Fig. 5), and wherein the segments with vertical diameters to the right may be estimated to be prostate (see Fig. 6).

A person of ordinary skill in the pertinent art, based on this disclosure, can readily identify an optimum value of Ts simply by incrementing values against test samples, without undue experimentation.

With continuing reference to Fig. 5, according to one aspect, at a logical block such as represented at 320, the ratio of the horizontal diameter to the vertical diameter is compared to Ts. If the ratio is larger than Ts a logical operation, such as represented as block 324, classifies the ImageObject region as seminal vesicles, and if the ratio is smaller than Ts a logical operation, such as represented as block 322, classifies the ImageObject region as prostate.

Referring to Figs. 1, 3, and 5, one example system implementation of the disclosed Fig. 5 example of one separation 108 is a digital processing resource such as, for example, resource 20 shown at Fig. 1. Machine-executable instructions for a digital processing resource, such as 20 shown in Fig. 1, to perform calculation and comparison of normalized autocorrelation functions of different ImagObject regions, are well within the skills of a person of ordinary skill in the pertinent arts, in view of the present disclosure.

Figs. 6-9 show example displays of boundaries generated by operations according to those disclosed in reference to Figs. 3-4.

Fig. 6 shows an image having a highlighted plurality 502 of pixels that accurately identify the boundary of the prostate of a test subject.

Fig. 7 shows an image having a highlighted plurality 602 of pixels that accurately identify the boundary of the prostate of a test subject, and another highlighted plurality 604 of pixels that accurately identify the boundary of the bladder of the test subject. The plurality 602 and 604 may be highlighted in different colors on, for example, a color display implementation of the display 34 of Fig. 1.

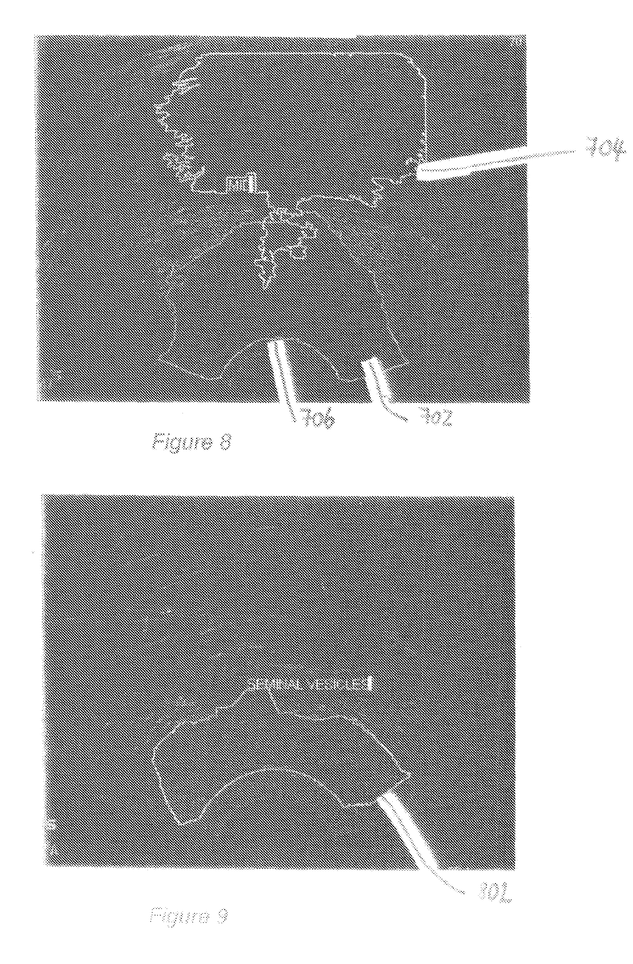

Fig. 8 shows an image having a highlighted plurality 702 of pixels that accurately identify the boundary of the prostate of a test subject, another highlighted plurality 704 of pixels, that accurately identify the boundary of the bladder of the test subject, and another highlighted plurality 706 of pixels, that accurately identify the boundary of the urethra of the test subject.

Referring to Figs. 7 and 8, according to one aspect the plurality 602 and 604 and pluralities 702, 704 and 706 may be highlighted in different colors on, for example, a color display implementation of the display 34 of Fig. 1.

Fig. 9 shows an image having a highlighted plurality 802 of pixels that accurately identify the boundary of the seminal vesicles of a test subject.

Referring to the Fig. 3 example method 100, according to one embodiment, after the separation 108 has separated the ImageObject regions from 106 into, for example, Category1 = prostate, Category2 = bladder, and Catgeory3 = seminal vesicles, an area estimation 110 may estimate an area, Area(ImageObject$_r$) of the r$^{th}$ ImageObject.

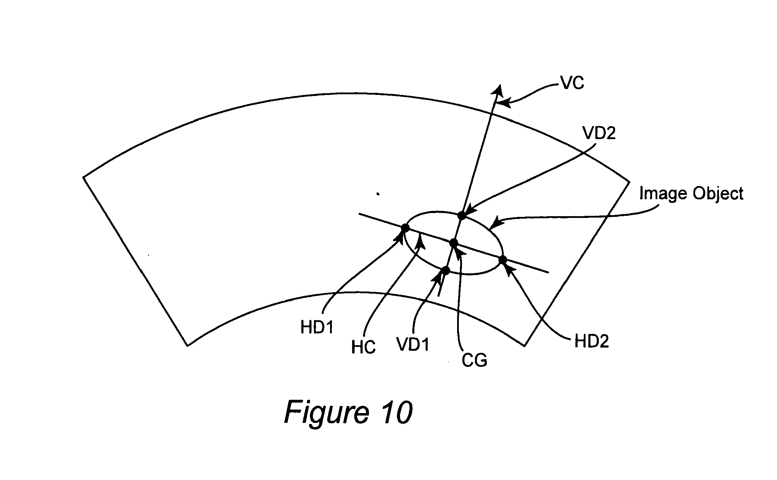

Referring to Fig. 10, according to one aspect, the 110 area estimation may be performed by, for example, estimating a center of gravity CG of the ImageObject region, forming a "vertical" ray VC passing in a ray direction through the center of gravity and assigning an estimated vertical length VL of the ImageObject as the distance between the VD1 intersection of the ray VC and the contour of the ImageObject, and the VD2 intersection of the ray VC and the contour of the ImageObject. Similarly, referring to Fig. 10, a "horizontal" ray HC is formed passing through the center of gravity CG and extending normal to the vertical ray VC. An estimated horizontal length HL of the ImageObject as the distance between the HD1 intersection of the ray HC and the contour of the ImageObject, and the HD2 intersection of the ray HC and the contour of the ImageObject. According to one aspect, the Area(ImageObject$_r$) may be estimated as:

$$\text{Area(ImageObject}_r) = \frac{(\Pi * HL * VL)}{4.0} \qquad \text{(Eq. 6)}$$

Referring to Fig. 10, according to one embodiment, additional rays passing through the center of gravity CG may be constructed, such as one ray (not shown) at 45 degrees relative to VC or HC, and one ray (not shown) at 135 degrees relative to VC or HC.

Referring to Fig. 3, according to one embodiment, at 112 a symmetry, Sym(ImageObject) may be estimated. Sym(ImageObject) may be a logical "TRUE" or "FALSE". Alternatively, Sym(ImageObject) may be a numerical value (not shown) within a given metric of symmetry.

According to one aspect, Sym(ImageObject) at 112 may be estimated by bisecting the ImageObject contour based on the vertical ray VC, selecting every pixel along the contour of the ImageObject on one side, and identifying a corresponding opposite pixel on the opposite contour, where "opposite" means in a direction normal to the vertical bisecting ray VC. According to one aspect, a predetermined threshold $T_{SYM}$ such as, for example, seven pixels is provided and, if the opposite pixel is not spaced within $T_{SYM}$ pixels of the distance as the selected pixels an asymmetry along that scan line. Alternatively, or additionally, according to one aspect a symmetry determination at 110 may also include counting the number of pixels of ImageObject that are on either side of the bisecting ray VC, and generating Sym(ImageObject) as a numerical value proportional, for example, to an absolute value of the difference between the two pixel counts.

Referring to Figs. 1, 3, and 10, one example system implementation of the 110 area estimation is a digital processing resource such as, for example, resource 20 shown at Fig. 1, having machine-executable instructions for performing all of the disclosed operations, or equivalents. Such machine-executable instructions in view of the present disclosure, are well within the skills of a person of ordinary skill in the pertinent arts.

While certain embodiments and features of the invention have been illustrated and described herein, many modifications, substitutions, changes, and equivalents will occur to those of ordinary skill in the art, and the appended claims cover all such modifications and changes as fall within the spirit of the invention.

**Claims**

1.  A method for identifying and categorizing objects in an image, comprising:

    receiving an image;

segmenting contours of the image into a plurality of closed contours;

categorizing each of the closed contours into one of a plurality of given categories, the categorization including calculating a min-max and a variance for each of the closed contours, comparing the respective min-max and variance calculated results, and generating a plurality of image object files, each image object file having an object category and a boundary contour; and

displaying at least one of the image object files, the displaying including indicating a contour corresponding to the boundary contour and indicating the object category of the image object file.

2.  The method of claim 1, further comprising estimating an area represented by at least one of the image object files.

3.  The method of claim 1 or 2, further comprising estimating a symmetry represented by at least one of the image object files.

4.  The method of any preceding claim, wherein said estimating includes:

    estimating a center of gravity,

    forming a vertical cord passing through center of gravity and intersecting the boundary contour at two opposite first points,

    forming a horizontal cord, substantially normal to the vertical cord, passing through the center of gravity and intersecting the boundary contour at two opposite second points,

    calculating a vertical diameter based on a difference between the two opposite first point,

    calculating a horizontal diameter based on a difference between the two opposite second points, and

    generating an estimated area based on the vertical diameter and the horizontal diameter.

5.  The method of any preceding claim, wherein said estimating a center of gravity includes calculating an average of a plurality of pixels on the contour.

6.  The method of any prceding claim, wherein said image includes an image of a prostate, and wherein said segmenting generates a contour of the image of prostate.

7.  The method of any preceding claim, wherein said image includes an image of a prostate and an image of a bladder, wherein said segmenting generates a contour of the image of prostate and contour of the image of the prostate, and wherein said categorizing generates an image object file representing the contour of the prostate and an image object file representing the contour of the bladder, and wherein said displaying displays a contour representing the contour of the prostate and displays a contour representing the contour of the bladder.

8.  The method of any preceding claim, further comprising estimating a symmetry of the contour of the prostate, the estimating a symmetry including detecting a symmetry of distance between pixels along the contour on a first side of the vertical cord compared to the distance between the vertical cord and pixels along the contour on a second side of the vertical cord, the second side being opposite the first side.

9.  The method of any preceding claim, further comprising estimating a symmetry of the contour of the prostate, the estimating a symmetry including counting pixels from the image within the contour of the prostate, and comparing the population of the pixels on side of the vertical cord to the population of pixels on the other side of the vertical cord.

10. An ultrasound image recognition system comprising: an ultrasound scanner having an RF echo output, an analog to digital (A/D) frame sampler for receiving the RF echo output, a machine arranged for executing machine-readable instructions, and a machine-readable storage medium to provide instructions, which if executed on the machine, perform operations comprising:

    receiving an image;

    segmenting contours of the image into a plurality of closed contours;

    categorizing each of the closed contours into one of a plurality of given categories, the categorization including calculating a min-max and a variance for each of the closed contours, comparing the respective min-max and variance calculated results, and generating a plurality of image object files, each image object file having an object category and a boundary contour; and

    displaying at least one of the image object files, the displaying including indicating a contour corresponding to the boundary contour and indicating the object category of the image object file.

**11.** The system of claim 10, wherein the machine readable storage medium further provides instructions, which if executed on the machine, perform a method according to one or more claims 1 to 9.

**12.** The system of any preceding claims 10 to 11, wherein the machine readable storage medium further provides instructions, which if executed on the machine, perform operations including receiving an image having an image of a prostate and an image of a bladder, and perform operations wherein said segmenting generates a contour of the image of prostate and contour of the image of the prostate, and perform operations wherein said categorizing generates an image object file representing the contour of the prostate and an image object file representing the contour of the bladder, and perform operations wherein said displaying displays a contour representing the contour of the prostate and displays a contour representing the contour of the bladder.

**13.** The system of any preceding claims 10 to 12, wherein the machine readable storage medium further provides instructions, which if executed on the machine, perform operations including estimating an area represented by the contour of the prostate, wherein the operations include:

estimating a center of gravity,
forming a vertical cord passing through center of gravity and intersecting the boundary contour at two opposite first points,
forming a horizontal cord, substantially normal to the vertical cord, passing through the center of gravity and intersecting the boundary contour at two opposite second points,
calculating a vertical diameter based on a difference between the two opposite first point,
calculating a horizontal diameter based on a difference between the two opposite second points, and
generating an estimated area based on the vertical diameter and the horizontal diameter.

**14.** The system of any preceding claims 10 to 13, wherein the machine readable storage medium further provides instructions, which if executed on the machine, perform operation including estimating a symmetry of the contour of the prostate, wherein the operations include detecting a symmetry of distance between the vertical cord and pixels along the contour on a first side of the vertical cord compared to the distance between the vertical cord and pixels along the contour on a second side of the vertical cord, the second side being opposite the first side.

**15.** The system of any preceding claims 10 to 14, wherein the machine readable storage medium further provides instructions, which if executed on the machine, perform operation including estimating a symmetry of the contour of the prostate, wherein the operations include counting pixels from the image within the contour of the prostate, and comparing the population of the pixels on side of the vertical cord to the population of pixels on the other side of the vertical cord.

*Figure 1*

*Figure 2*

EP 2 085 931 A2

Figure 3

*Figure 4*

Figure 5

Figure 6

Figure 7

*Figure 8*

*Figure 9*

Figure 10